# EUROPEAN PATENT APPLICATION

(11) **EP 1 174 744 A1**
(43) Date of publication of application: **23.01.2002**
(21) Application number: 00402079.8
(22) Date of filing: 21.07.2000
(51) Int. Cl.: G02B 6/38, G02B 6/255

(54) **Method and apparatus for splicing optical fibers**

(71) Applicant: Corning Incorporated, Corning, New York 14831 (US)
(72) Inventor: Herve, Patrick Jean Pierre, Corning Incorporated, Corning, NY 14831 (US); Tian, Yong, Corning Incorporated, Corning, NY 14831 (US)
(74) Representative: Charlton, Peter John

(57) **Abstract**

A method and apparatus for aligning optical fibers for splicing utilizing a grooved holder (22) and positioning arms that engage the fiber ends (17, 18) and bring them precisely together in alignment for splicing. The grooves (24, 24', 26, 26', 28, 28') of the holder have a channel (27) extending therebetween. The precisely formed grooves (24, 24', 26, 26', 28, 28') provide X and Y alignment of the fibers in conduction with positioning arms (32, 32') having resilient pads (36, 36'). The resilient pads (36, 36') allow the positioning arms (32, 32') to frictionally engage the optical fibers (15, 16) and bring their respective ends (17, 18) into position for fusion splicing. The splicing method includes the steps of positioning fiber ends (17, 18) in aligned grooves (28, 28'), holding the fibers (17, 18) in the grooves (28, 28') with outer clamps (49, 59), allowing movement of the fibers (15, 16) thereunder, engaging fiber ends (17, 18) with positioning arms (32, 32'), bringing the fiber ends (17, 18) together utilizing the positioning arms (32, 32'), and fusing the fiber ends (17, 18) employing a CO₂ laser (60).

## Description

### BACKGROUND OF THE INVENTION

### Field of the Invention

The present invention relates to a method of precisely aligning and splicing optical fibers and particularly multiple optical fibers and apparatus employed in such method.

### Technical Background

The manufacture of complex optical components requires the splicing of optical fibers, typical multiple splices, where numerous components are placed on a single substrate commonly referred to as a cassette. In the past, electric arc splicing has been commonly used in which fiber ends are placed in an alignment fixture in which an approximate 6 mm gap exists to allow the electric arc to fuse the ends of the fibers. This results in a cantilevered distance of 3 mm for each of the fibers, which allows the intrinsic curl of the fibers as well as the cantilevered bending of the fibers to cause misalignment of the fiber ends resulting in losses as high as 1 dB or more in signals propagating through the spliced area. In order to overcome the difficulties of the splices resulting from electric arc splicing, CO₂ lasers have recently been employed and their power controlled to provide precise splicing with less of a gap between the holding fixtures. In order to manufacture complex optical components which include multiple optical elements, such as filters, switches, amplifiers and the like, all positioned on a substrate subsequently packaged for use in the field, it is desirable to provide a fiber alignment and splicing apparatus which efficiently allows multiple splices for coupling fibers to be made utilizing a CO₂ laser.

### SUMMARY OF THE INVENTION

The system of the present invention accommodates this need by providing a method and apparatus for aligning fibers to be spliced utilizing a grooved block assembly and positioning arms which engage fiber ends, bringing them precisely together in alignment for splicing utilizing a CO₂ laser. In a preferred embodiment of the invention, the splicing apparatus includes a primary clamp including a grooved holder with aligned grooves having a channel therebetween for aligning ends of optical fibers to be spliced. A pair of secondary clamps may be employed to provide an initial holding structure. The groove holder cooperates with positioning arms having resilient pads to provide the final alignment. The groove holder is formed either by precise machining of a suitable material or alternately etching silicon to form a plurality of rows of parallel grooves for holding optical fibers therein, such that multiple splices can be made utilizing the fixture so-formed. The precisely formed grooves provide X and Y alignment of the fibers under the compression of resilient pads attached to positioning arms to precisely position the fibers in orthogonal planes in horizontal and vertical directions, while the resilient pads attached to the positioning arms provide precise coupling of fiber ends along the Z direction of the fiber axis.

Methods embodying the present invention include the steps of positioning fiber ends in aligned grooves, holding the fibers in the grooves with outer clamps allowing movement of the fibers thereunder, engaging fiber ends with positioning arms having resilient pads, bringing the fiber ends together utilizing the positioning arms, and fusing the fiber ends employing a CO₂ laser. In a preferred embodiment of the invention, the method includes clamping a plurality of aligned pairs of optical fibers in a plurality of grooves formed in a holder, such that successive splices of optical fibers can be made.

Additional features and advantages of the invention will be set forth in the detailed description which follows and will be apparent to those skilled in the art from the description or recognized by practicing the invention as described in the description which follows together with the claims and appended drawings.

It is to be understood that the foregoing description is exemplary of the invention only and is intended to provide an overview for the understanding of the nature and character of the invention as it is defined by the claims. The accompanying drawings are included to provide a further understanding of the invention and are incorporated and constitute part of this specification. The drawings illustrate various features and embodiments of the invention which, together with their description serve to explain the principals and operation of the invention.

### BRIEF DESCRIPTION OF THE DRAWINGS

Fig. 1 is a perspective, schematic, and block diagram of the apparatus for splicing multiple optical fibers utilizing the method and apparatus of the present invention;
Fig. 2 is an enlarged cross-sectional view, taken along section line II-II of Fig. 1, of the splicing apparatus;
Fig. 3 is a greatly enlarged cross-sectional view, taken along section line III-III of Fig. 1, showing one of the positioning arms and its relationship to the associated groove of the apparatus; and
Fig. 4 is a plan schematic view of a complex optical component including multiple optical elements and a plurality of splices formed utilizing the method and apparatus of the present invention.

### DETAILED DESCRIPTION OF THE PREFERRED EMBODIMENT

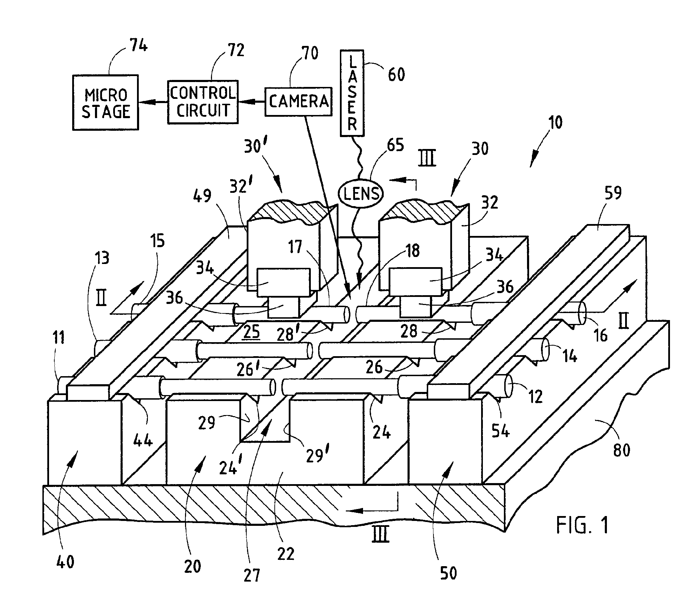

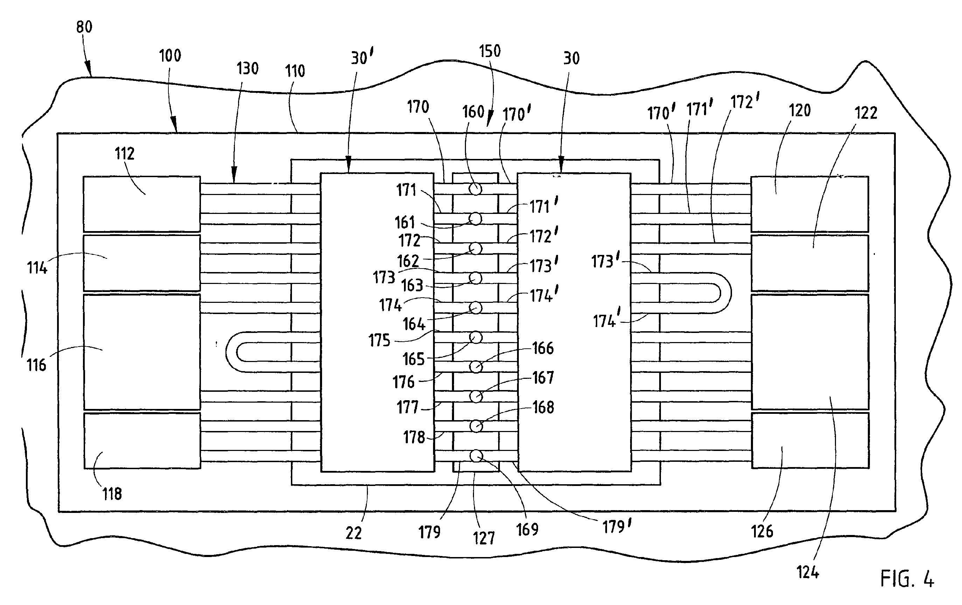

Referring initially to Fig. 1, there is shown a splicing apparatus 10 for splicing optical fibers, such as fiber 11 to fiber 12, fiber 13 to fiber 14, and fiber 15 to fiber 16. Although only three pairs of fibers to be spliced are shown in Fig. 1, it is to be understood that numerous splices can be made utilizing the apparatus and method of the present invention and, for example, in Fig. 4 ten such splices are illustrated.

The fibers 11-16 can be conventional optical fibers, such as SMF 28™, available from Corning Incorporated of Corning, New York, having a core diameter of approximately 7 µm, a standard cladding diameter of 125 µm covered with a polymeric covering. The ends of the fibers are stripped, as shown at 17 and 18, for example, for fibers 11 and 12, exposing about 10 mm of the fiber cladding at fiber ends 17 and 18 for each of the pairs of fibers to be spliced. The splicing apparatus comprises a primary clamp 20 and secondary clamps 40 and 50 for accurately positioning the pairs of fibers in alignment with one another for subsequent splicing by a CO₂ laser 60 whose beam is focused on the splicing area by lens 65 as described in greater detail below.

Each of the clamp assemblies 20, 40 and 50 are mounted on a stage 80 which provides X, Y, and rotational alignment of the fiber holding clamps with respect to the focused laser beam and with respect to a camera 70, which is directed to the splicing area and employed to control micro-manipulators utilized for bringing the fiber ends together as described below. Thus, in a preferred embodiment of the invention, the laser 60 is stationary and the stage 80 moves the clamped optical fibers in alignment under the laser beam. The camera is tilted at an angle of approximately 45° to the laser beam to provide a signal input indicating the alignment of optical fiber ends. Each of the clamps 20, 40 and 50 include a base and a clamping member for holding pairs of optical fibers in precise alignment with one another for splicing. Having described the overall structure, a detailed description of the clamping assembly is now presented in connection with Figs. 1-3.

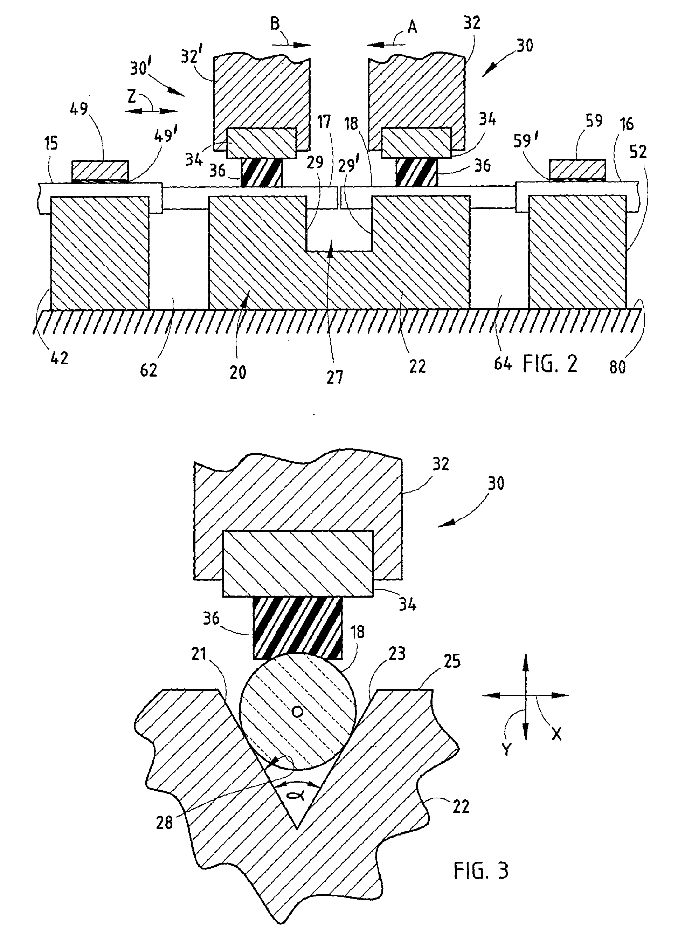

The primary clamp 20 comprises a monolithic holder 22 having a plurality of precisely formed, parallel spaced grooves 24, 26, and 28 (for the three grooves illustrated in the figure). It is to be understood, however, that multiple grooves can be formed in the monolithic holder 22 to allow mass production of multiple splices in a component such as that shown in Fig. 4. The holder 22 can be precisely machined of a material, such as stainless steel or silica, or can be photolithographicly etched utilizing, for example, silicon to precisely form the grooves which each, as seen in Fig. 3, have converging side walls 21 and 23 at an angle α of from between 45° and 90° but preferably about 70°. The vertical depth of each of the grooves is about 120µm, while the opening at the top is approximately 150µm wide, such that an optical fiber end, such as end 18 illustrated in Fig. 3, will project above the top surface 25 of holder 22 a distance to allow the positioning arm assembly 30 to engage the outer surface of the cladding of each of the optical fibers.

The grooves 24, 26, and 28 are formed continuously along the transverse direction of holder 22 having a pitch of about 1 mm between the apices of each of the grooves to allow sufficient spacing between optical fibers for their splicing. Holder 22 is formed by first forming the spaced, parallel grooves. Subsequently, a generally rectangular channel 27 is formed transverse to the grooves to divide each of the grooves and provide a splicing area between side walls 29 and 29' of channel 27. Channel 27 has a width of from about 2 mm to about 3 mm and a similar depth and provides an open work area for the laser splicing to occur. By providing the grooves through holder 22 first and subsequently forming channel 27, the grooves 24, 26, and 28 and the mating separate grooves 24', 26', and 28' (Fig. 1), are precisely aligned for aligning the opposite ends of pairs of fibers.

Alternatively, the channel 27 of the holder 22 may be replaced by a depression over which the opposite ends of fiber pairs may be extended.

The primary clamp 20 further includes a pair of resilient positioning arms 30 and 30' (Figs. 1 and 2), which comprise a micro-manipulator holder 32 gripping a mounting block 34 to which there is integrally molded a block of resilient polymeric material 36, such as silicon, having a length along the axis of the optical fiber of about 7mm, a width transverse to the axis of the optical fiber of about 200 µm and a thickness of about 200 µm, such that the resilient material 36 grips the outer cladding of the fiber (such as fiber end 18 shown in Fig. 3) for moving the fiber ends together in directions indicated by arrows A and B in Fig. 2 from their initial position, shown in Fig. 1, to a precisely aligned position with a gap of approximately 1 µ between the fiber ends for splicing. The micro-manipulator arms 32, 32' are controlled under the influence of the signal detected by camera 70 through control circuit 72 and a micro-stage actuator 74 utilizing conventional vision control systems utilized, for example, the optical alignment systems found in Ericsson fusion splicers.

Before the final alignment of the ends of pairs of optical fibers, the fibers are initially held by the secondary clamps 40, 50, each of which include a holder 42 and 52, respectively, similarly including a plurality of grooves 44 and 54 which are aligned with the corresponding grooves 24', 26' and 28' and are of the same dimensions. A clamping arm 49 and 59 having a polymeric coating surface 49' and 59' clamps to the covering of the pairs of optical fibers loosely holding the fibers in an initially aligned position but allowing the optical fibers to be moved utilizing resilient clamps 30, 30' toward one another centered within channel 27. In some embodiments, it may be desired to manufacture holders 22, 42 and 52 as an integral component mounted to the adjustable stage 80 as opposed to separate elements mounted to the stage. Thus, in some embodiments, continuous grooves can be formed through a single block of material and channel 27 and open spaces 62 and 64 (Fig. 2) formed partially downwardly through the upper surface of the holder to provide outer holding areas for each of the pairs of optical fibers and the primary clamping and moving structure of holder 22.

The critical alignment, however, takes place in the primary clamp 20, which precisely aligns the ends and, by virtue of the shape of the grooves 24, 26, 28, 24', 26', and 28', holds the pairs of fiber ends, such as 17 and 18, in precise alignment in vertical and horizontal directions (or the X and Y axis, as illustrated in Fig. 3), while the resilient positioning arms 30 and 30' move the fibers along their longitudinal or Z axis, as shown in Fig. 2 by arrows A and B. Although a V-shaped groove is illustrated as the preferred embodiment of the fiber end holding element, other shaped grooves having converging walls which accurately position a fiber in the X and Y planes may also be employed. Thus, partial cylindrical grooves, U-shaped grooves, or other grooves may be employed as long as they are accurately machined to precisely position the ends of opposed pairs of fibers to be spliced in alignment in the X and Y axes.

The method of splicing the fibers employing the present invention comprises the steps of initially placing the fibers in the secondary holders 40, 50 with their facing ends approximately 1 mm apart and actuating clamps 49, 59, which are solenoid-actuated clamps of conventional construction, to hold the fibers generally in alignment with the ends 17, 18 of each pair of fibers laying within the corresponding grooves 24, 24', 26, 26', 28 and 28'. The initial gap, shown in Fig. 1, between fiber ends is centered within channel 27, which can be confirmed by viewing the structure through camera 20, while controlling the movable stage 80 which can rotate and translate in orthogonal directions for positioning the fiber to be spliced precisely under the laser beam.

Next, the resilient clamps 30, 30' are brought downwardly into engagement with the top of fiber, such as fiber end 18 as shown in Fig. 3, deflecting the resilient pad 36 about 10 µm to 30 µm to provide enough frictional engagement to grip the cladding and seat the ends of optical fibers 17 and 18 within the groove without binding the fiber in the groove such that they can be slid along the grooves in a direction indicated by arrows A and B in Fig. 2. The micro-manipulator arms 30, 30' can move approximately 1 mm and, initially, the fiber ends are brought within one another a distance of about 10 µm to 20 µm which is determined by viewing the fiber ends through camera and controlling the micro-manipulators through control circuit 72 and actuator 74.

Once the ends are aligned precisely by holding the fiber ends within the corresponding grooves and brought together within a gap of about 10 µm to about 20µm, as illustrated in Fig. 2, laser 60 is actuated to perform the splicing. During the splicing, which takes approximately 2 seconds for SMF-28™ optical waveguide fiber available from Corning Incorporated of Corning, New York, micro-manipulators 30, 30' are moved again together in a direction indicated by arrows A and B about 15 µm to about 25 µm for each fiber to complete the splicing by fusion process. The beam from CO₂ laser 60 is focused by lens 65 to a beam diameter of about three to four times the fiber diameter or about from 100 to 400µ, with the laser providing a power of about 4 watts for 2 seconds to fuse the fibers and achieve splicing. Details of the control of laser 60 is provided in the parent patent application identified above. Upon completion of the first splice of a series of splices for a component, stage 80 is moved in a direction corresponding to the longitudinal axis of channel 27 to position the next pair of fiber ends to be spliced under the laser beam for repeating the bringing together of the fiber ends and fusion of the aligned ends.

A number of splices can be made for an optical component, such as optical component 100 shown in Fig. 4, which includes a substrate or cassette 110 on which multiple optical elements, such as components 112, 114, 116, 118, 120, 122, 124, and 126, are mounted and intercoupled by multiple optical fibers 130. The primary holder 22 of the present invention may be mounted directly to the substrate 110 with the cassette 100 being placed on the stage 80 for manipulation of the splicing area 150 (Fig. 4) for the interconnection of optical fibers coupling each of the components 112 through 126. In the embodiment shown, ten such splices 160 through 169 of fibers 170, 170' through 179, 179' are shown. In such an embodiment, the secondary clamps 40 and 50 may be integrated with holder 22 as described above.

Thus, as seen with the apparatus and method of the present invention, numerous splices for coupling a number of optical components can be made to provide an overall complex optical component having multiple interconnected elements. With the splicing of the present invention, a splice length of about less than 2.5 mm is provided, which results in a loss of only about 0.04 dB per splice at 1310 nm as opposed to a 6 mm splice for electric arc splices, which can result in as much as a 1 dB loss per splice.

It will become apparent to those skilled in the art that various modifications to the preferred embodiment of the invention as described herein can be made without departing from the spirit or scope of the invention as defined by the appended claims.

## Claims

**1.** A method of splicing optical fibers comprising:
placing stripped optical fibers in a pair of aligned grooves (28, 28') having a channel (27) formed between said aligned grooves (28, 28'), each of the grooves (28, 28') having a depth exposing an upper surface of the optical fiber (16);
engaging the optical fiber (16) within the groove with resilient positioning arms (36) for seating each of the optical fibers (16) in the grooves (28, 28') while allowing the fibers to move along the grooves toward one another; and
moving each of the optical fibers toward one another to position their ends in close proximity for fusion.

**2.** The method of claim 1 and further including the step of directing a laser beam onto the fiber ends for fusing the fiber ends together.

**3.** The method of claim 2 and further including the step of bringing the fiber ends toward one another utilizing the positioning arms while exposed to the laser beam.

**4.** The method of claim 3 and further including the steps of clamping the fibers utilizing a pair of clamps spaced outwardly from opposite sides of the grooves for preliminary positioning the fibers in alignment with one another.

**5.** An apparatus for splicing optical fibers including:
a holder (22) having a plurality of parallel spaced-apart grooves (24, 24', 26, 26', 28, 28') formed therein and a channel (27) formed transversely to said grooves (24, 24', 26, 26', 28, 28') to define aligned pairs of grooves (24, 24', 26, 26', 28, 28') for receiving ends of pairs of optical fibers (11, 12; 13, 14; 15, 16) to be spliced, wherein the grooves (24, 24', 26, 26', 28, 28') have side walls converging at an angle of from about 45° to about 90°; and
a pair of positioning arms (32, 32') alignable above each pair of opposing grooves (24, 24', 26, 26', 28, 28') of the holder for moving fiber ends toward one another.

**6.** The apparatus of claim 5 and further including a pair of outer clamps (49, 59) spaced from said holder for positioning optical fibers (11, 12, 13, 14, 15, 16) in said holder.

**7.** The apparatus of claim 6 and further including a laser (60) positioned with respect to the holder (22) for directing a beam onto aligned ends of optical fibers for fusing the fiber ends.

**8.** The apparatus of claim 7 and further including a movable stage (80) receiving the holder to successively position optical fibers (11, 12; 13, 14; 15, 16) to be spliced in alignment with the beam of the laser (60).

**9.** A system for splicing optical fibers comprising:
a holder (22) having a plurality of grooves (24, 24', 26, 26', 28, 28') formed therethrough separated by a channel (27) to define aligned spaced grooves for receiving ends of optical fibers (11, 12, 13, 14, 15, 16) to be spliced, wherein the grooves (24, 24', 26, 26', 28, 28') have converging side walls (21, 23); and
a positioning arm (32, 32') aligned above each of the grooves (24, 24', 26, 26', 28, 28') of said holder (22) for seating the fibers (11, 12, 13, 14, 15, 16) with grooves (24, 24', 26, 26', 28, 28') and for moving fiber ends toward one another.

**10.** The system of claim 9 and further including a laser (60) positioned in alignment with ends of fibers positioned in the grooves (24, 24', 26, 26', 28, 28') for fusing the ends of aligned fibers.

**11.** The system of claim 10 wherein said grooves (24, 24', 26, 26', 28, 28') are generally V-shaped.

**12.** The system of claim 11 wherein each of said positioning arms (32, 32') includes a resilient pad (36, 36') for frictionally engaging a fiber (15, 16) positioned in a groove (28, 28').

**13.** A method of splicing optical fibers comprising:
placing stripped optical fibers (15, 16) in a holder (22) with a pair of aligned grooves (28, 28') having a channel (27) formed between said aligned grooves (28, 28'), each of the grooves (28, 28') having a depth for exposing the surface of the optical fiber;
engaging the optical fiber (15, 16) within the groove (28, 28') with positioning arms (32, 32') for seating each of the optical fibers (15, 16) in the grooves (28, 28'); and
moving the optical fibers toward one another with the positioning arms (32, 32') to position the ends of the fibers (17, 18) in close proximity for fusion.

**14.** The method of claim 13 and further including the step of directing a laser beam onto the fiber ends (17, 18) for fusing the fiber ends (17, 18) together.

**15.** The method of claim 14 and further including the step of providing resilient pads (36, 36') on the positioning arms (32, 32') such that the pads (36, 36') engage the optical fibers (15, 16).

**18.** The method of claim 13 wherein a complex optical component is assembled by the steps of:
placing a plurality of optical fibers (11, 12, 13, 14, 15, 16) from multiple optical elements in a plurality of aligned grooves (24, 24', 26, 26', 28, 28') in the holder with corresponding optical fibers to be spliced held in aligned proximity for splicing; and
sequentially positioning each pair of optical fibers (11, 12; 13, 14; 15, 16) to be spliced in alignment with a laser beam for splicing the plurality of optical fibers (11, 12; 13, 14; 15, 16).

**19.** An optical component manufactured by the steps of claim 18.
